Europäisches Patentamt

European Patent Office

Office européen des brevets

(11) Publication number: **0 468 472 A1**

# EUROPEAN PATENT APPLICATION

(21) Application number: **91112413.9**

(51) Int. Cl.⁵: **G11B 20/10**, G11B 5/035

(22) Date of filing: **24.07.91**

(30) Priority: **25.07.90 JP 79124/90 U**

(43) Date of publication of application:
**29.01.92 Bulletin 92/05**

(84) Designated Contracting States:
**DE FR GB**

(71) Applicant: **MITSUBISHI DENKI KABUSHIKI KAISHA**
**2-3, Marunouchi 2-chome Chiyoda-ku**
**Tokyo(JP)**

(72) Inventor: **Ikeshita, Koji, Itami Seisakusho,**
**Mitsubishi Denki**
**Kabushiki Kaisha, 1-1,**
**Tsukaguchi-Hommachi 8-chome**
**Amagasaki-shi, Hyogo-ken(JP)**

(74) Representative: **Pfenning, Meinig & Partner**
**Mozartstrasse 17**
**W-8000 München 2(DE)**

(54) **Recording/reproducing circuit for disk apparatus.**

(57) A recording/reproducing circuit for disk apparatus having a switching device (10) mounted between differential signal lines in the front stage of an automatic gain control amplifier (4). This switching device is controlled to be turned on/off by a write/read changing signal, so that the DC potential difference of differential outputs of an initial amplifier during the write time is removed, with generation of the transient state when the write mode is switched to the read mode being restricted.

Fig. 3

## BACKGROUND OF THE INVENTION

Field of the Invention

This invention relates to a recording/reproducing circuit for disk apparatus designed to record data to/reproduce data from a disk drive such as a magnetic disk, a magneto-optical disk or the like as an external storage of a computer, etc.

Description of Related Art

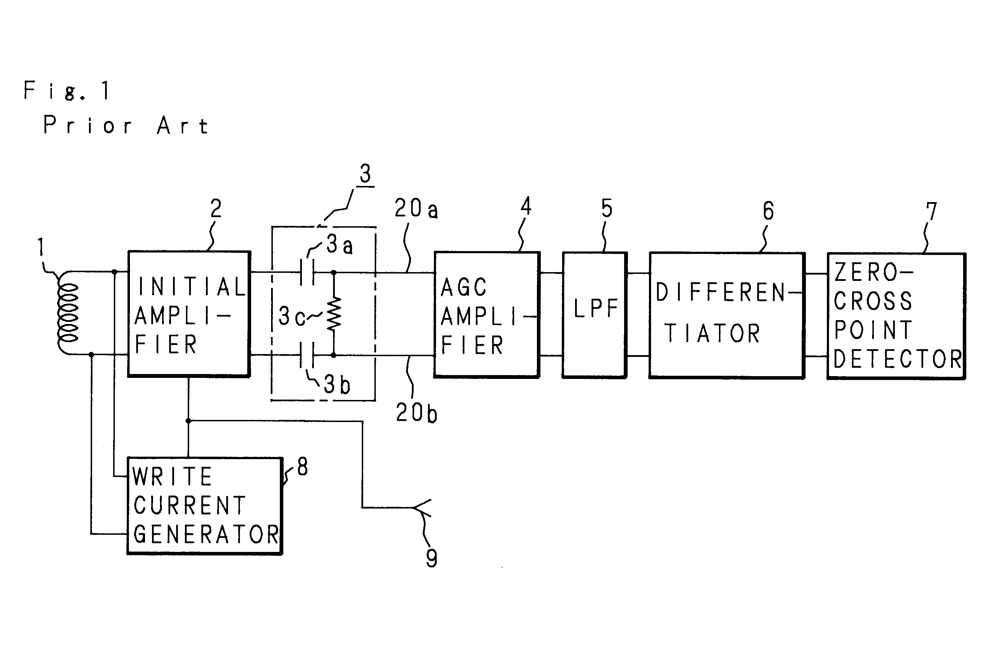

Fig. 1 is a block diagram showing the structure of a conventional recording/reproducing circuit for disk apparatus disclosed in, for example, Japanese Patent Application Laid-Open No. 63-86154 (1988). In this Fig. 1, data is written to or read from to a magnetic disk (not shown) by a magnetic head 1 which is connected with an initial amplifier 2 for amplifying an analog read signal read from the magnetic disk and a write current generator 8 for generating a write current at the write time of the data. The initial amplifier 2 is connected to an automatic gain control amplifier 4 (referred to as an AGC amplifier hereinafter) via differential signal lines 20a, 20b. Also provided between the initial amplifier 2 and AGC amplifier 4 is a high pass filter 3 (referred to as an HPF hereinafter) to remove low-frequency noises included in the read signal amplified by the initial amplifier 2. The HPF 3 is constituted of capacitors 3a, 3b installed in respective signal lines 20a, 20b and a resistance 3c provided between the differential signal lines 20a and 20b. AGC amplifier 4 amplifies and controls the read signal passing through the HPF 3 to have a constant amplitude.

To the AGC amplifier 4 is connected in series a low pass filter 5 (referred to as an LPF hereinafter) for removing high-frequency noises included in thee read signal outputted from the AGC amplifier 4, a differentiator 6 for differentiating the read signal passing through the LPF 5, and a zero-cross point detector 7 which reproduces a zero-cross point of the differential signal outputted from the differentiator 6 as a data read pulse, sequentially in this order. A write/read changing signal 9 is outputted to the initial amplifier 2 and read current generator 8 to switch the writing (recording) operation and the reading (reproducing) operation.

The operation of the conventional recording/reproducing circuit in the above structure will be discussed below.

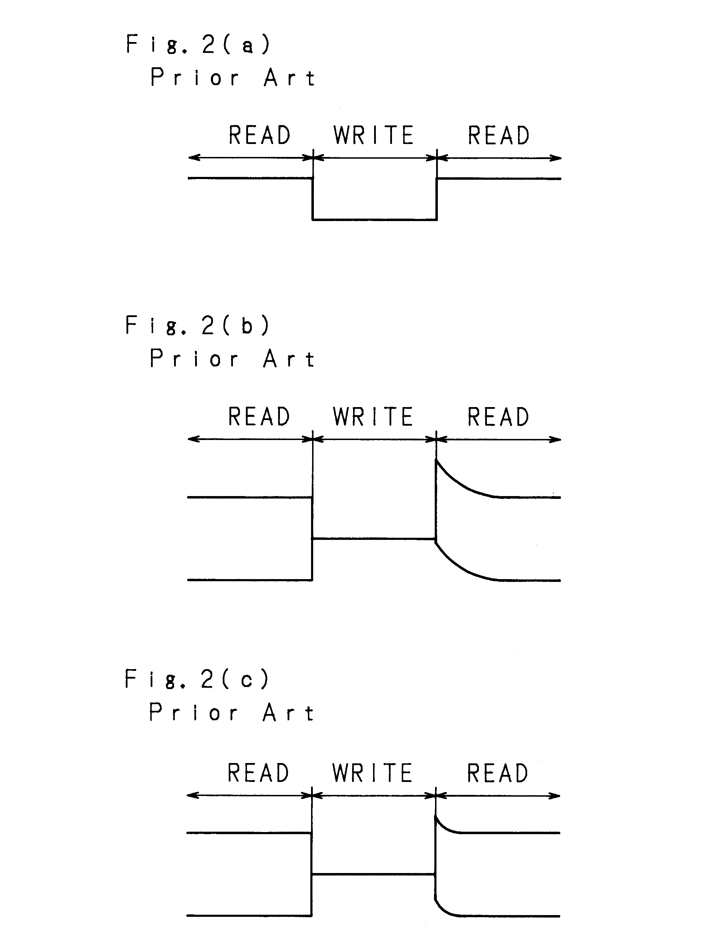

Fig. 2 shows signal waveforms at each part of the recording/reproducing circuit, more specifically, Fig. 2(a) representing the waveform of the write/read changing signal 9, Fig. 2(b) being the waveform of a read signal outputted from the initial amplifier 2 and Fig. 2(c) expressing the waveform of a read signal passing through the HPF 3.

In the event data is to be written (recorded) in a magnetic disk, a write current is generated in the write current generator 8 in response to the write/read changing signal 9, and fed to the magnetic head 1. Thus, the data is written into the magnetic disk.

On the other hand, if the data is to be read out (reproduced) from the magnetic disk, an analog read signal is read out by the magnetic head 1 from the magnetic disk and amplified by the initial amplifier 2 (Fig. 2(b)). Low-frequency noises in the transient state resulting from a crosstalk from an adjacent track, generated when the magnetic head is changed or when the writing/reading operation is switched, are removed from the amplified read signal by the HPF 3 (Fig. 2(c)). Thereafter, the read signal is amplified and controlled by the AGC amplifier 4 to have a constant amplitude. High-frequency noises of the amplified read signal are removed by the LPF 5, then the read signal is differentiated by the differentiator 6 and a zero-cross point of the differential signal detected by the zero-cross point detector 7 is reproduced as a read pulse.

In the above-discussed structure of the conventional recording/reproducing circuit, the potential is different in differential outputs of the initial amplifier 2. Therefore, in the case where data is to be read out after changing the write mode to the read mode by the write/read changing signal 9, the transient state results from this DC potential difference as shown in Fig. 2(b). Although the transient components are superimposed with the read signal as the low-frequency noises, it is impossible to perfectly remove the noise components by the HPF 3, as is clear from Fig. 2(c), thereby causing undesirable errors in reading the data.

## SUMMARY OF THE INVENTION

One object of this invention is to provide a recording/reproducing circuit for disk apparatus, which is capable of suppressing the transient state brought about when the write mode is switched to the read mode.

A further object of this invention is to provide a recording/reproducing circuit for disk apparatus, whereby low-frequency noise components can be completely removed thereby to improve the reliability at the read time of data.

A still further object of this invention is to provide a recording/reproducing circuit for disk apparatus, wherein a settling time of a read signal immediately after the write mode is switched to the read mode is shortened thereby to reduce errors in reading the data.

In the recording/reproducing circuit for disk apparatus of this invention, a switching device such as a field effect transistor or the like is provided between differential signal lines in the front stage of an AGC amplifier, which is arranged to be turned on/off by a write/read changing signal. When data is to be written in accordance with the write/read changing signal, the field effect transistor is short-circuited between a source and a drain thereof, thereby removing the DC potential difference of differential outputs of an initial amplifier. If the data is to be read, on the other hand, the field effect transistor is opened between the source and drain thereof. Because of the on/off control of the switching device as above, the DC potential difference of the differential outputs of the initial amplifier at the write time is not generated, and the transient state when the write mode is switched to the read mode is restricted.

The above and further objects and features of the invention will more fully be apparent from the following detailed description with accompanying drawings.

BRIEF DESCRIPTION OF THE DRAWINGS

Fig. 1 is a block diagram showing the structure of a conventional recording/reproducing circuit for disk apparatus;

Fig. 2 is a diagram of signal waveforms at each part of the conventional recording/reproducing circuit for disk apparatus;

Fig. 3 is a block diagram showing the structure of a recording/reproducing circuit for disk apparatus according to this invention;

Fig. 4 is a diagram of signal waveforms at each part of the recording/reproducing circuit for disk apparatus according to this invention; and

Fig. 5 is a block diagram showing the structure different from that of Fig. 3 of a recording/reproducing circuit for disk apparatus according to this invention.

DESCRIPTION OF THE PREFERRED EMBODIMENT

Now, this invention will be fully discussed with reference to the accompanying drawings.

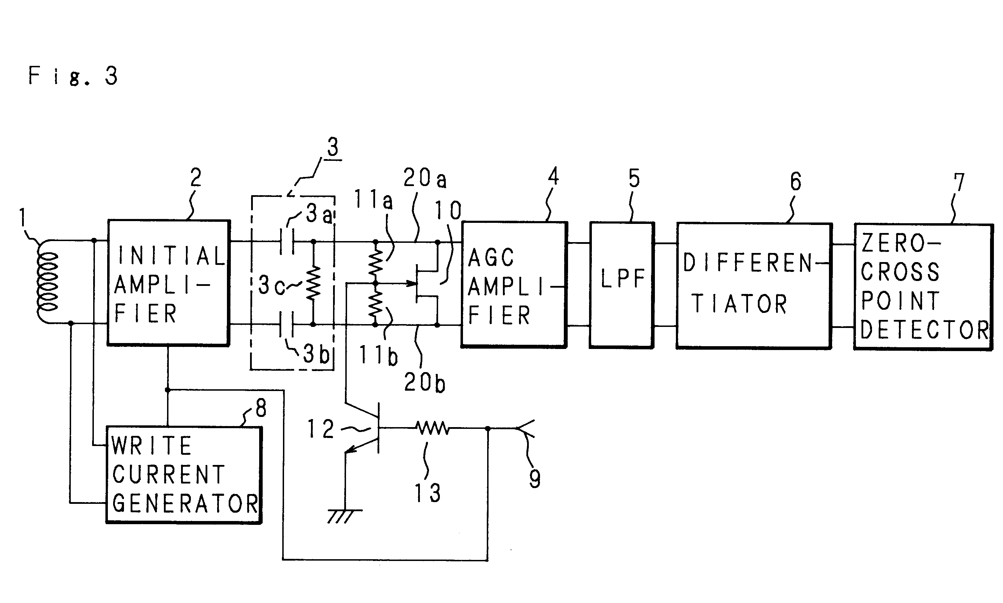

Referring to Fig. 3, a block diagram shown therein indicates the structure of a recording/reproducing circuit for disk apparatus according to one preferred embodiment of this invention, wherein parts designated by the same reference numerals as in Fig. 1 are equivalent to those of Fig. 1, and the detailed description thereof will be abbreviated here.

In Fig. 3, an N-channel field effect transistor 10 (referred to as an FET hereinafter) is arranged between differential signal lines 20a and 20b in the front stage of the AGC amplifier 4 as a switching device. A source terminal and a drain terminal of FET 10 are connected to the differential signal lines 20a and 20b, respectively. Moreover, a gate terminal of FET 10 is connected to a collector terminal of a transistor 12 which switches the gate potential of FET 10. Resistances 11a, 11b are interposed between the gate terminal of FET 10 and differential signal lines 20a, 20b so as to impress the potential to the gate terminal. An emitter terminal of the transistor 12 is earthed, while a base terminal of the transistor 12 is connected to a base resistance 13. The write/read changing signal 9 is inputted to the base terminal of the transistor 12 through the base resistance 13.

The recording/reproducing circuit in the above-described structure operates in the following manner.

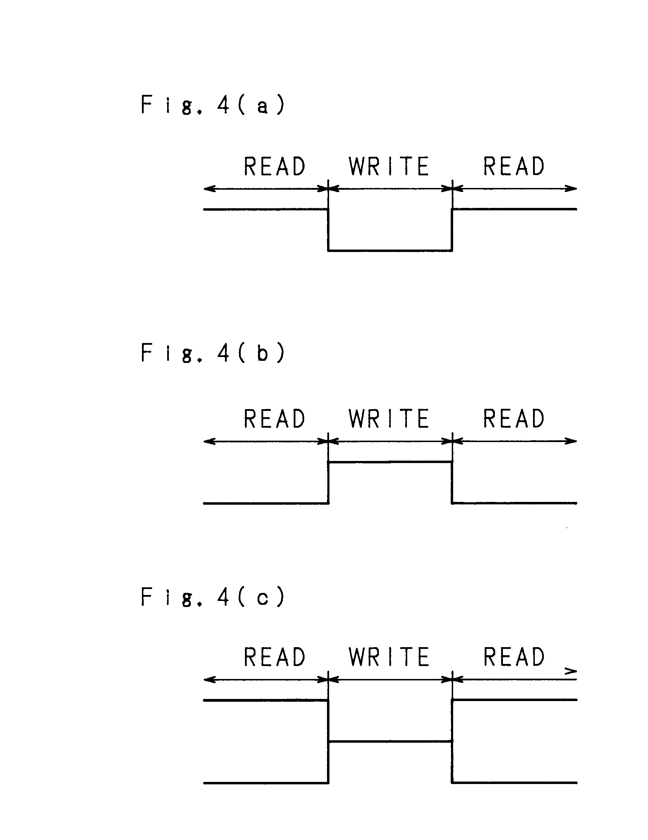

Fig. 4 shows signal waveforms at each part of the recording/reproducing circuit of Fig. 3. Figs. 4-(a), 4(b) and 4(c) respectively represent the waveforms of the write/read changing signal 9, a level signal of the gate terminal of FET 10 and the read signal passing through the HPF 3.

In the first place, if the data is to be written into a magnetic disk, the current generator 8 generates a write current in accordance with the write/read changing signal 9, with allowing the current to run in the magnetic head 1. Accordingly, the data is written into the magnetic disk 1. As shown in Fig. 4(a), the write/read changing signal 9 is "Low" during the write time, and therefore, the collector terminal of the transistor 12, that is, gate terminal of FET 10 is "High" (Fig. 4(b)). Since FET 10 is of N-channel type, between the source and drain of FET 10 is short-circuited when the gate terminal is "High", whereby the DC potential difference of differential outputs of the initial amplifier 2 is erased.

Meanwhile, if the data is to be read out from the magnetic disk, as indicated in Fig. 4(a), the write/read changing signal 9 becomes "High" and the collector terminal of the transistor 12, namely, gate terminal of FET 10 becomes "Low" (Fig. 4(b)-). As a result, between the source and drain of FET 10 is opened, whereby the read signal is processed. Since the reading operation in the other points proceeds in the same manner as in the prior art, the description thereof will be abbreviated.

As is depicted hereinabove, the FET 10 is turned on/off when the data is written or read out, so that the DC potential difference of differential outputs of the initial amplifier 2 during the write time is removed. In consequence, generation of the transient state is restricted as is known from the waveform of Fig. 4(c), and a settling time of the waveform of the read signal immediately after the write mode is changed to the read mode is reduced.

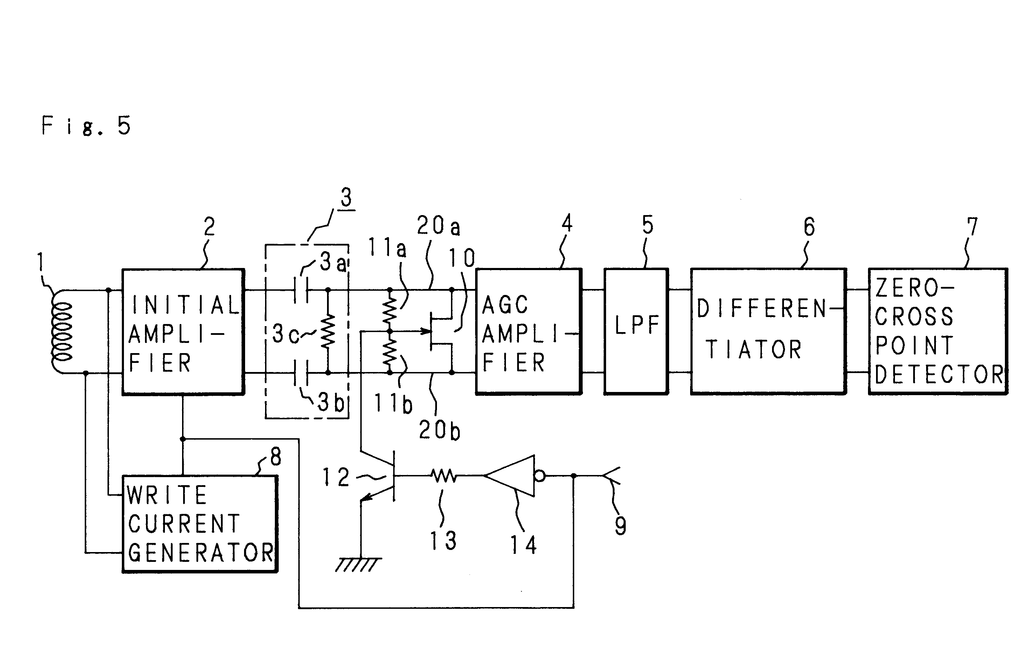

The FET 10 is of N-channel type in the above embodiment. However, A P-channel FET may be employed as shown in Fig. 5. A reference 14 in Fig. 5 is an inverter to short-circuit between the source and drain of the P-channel FET when the gate potential of FET becomes zero. The other structure and operation of the recording/reproducing circuit of Fig. 5 are identical to those of the embodiment shown in Fig 3.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the metes and bounds of the claims, or equivalence of such metes and bounds thereof are therefore intended to be embraced by the claims.

**Claims**

1.  A recording/reproducing circuit for recording data to/reproducing data from a magnetic disk, comprising:

      a magnetic head for writing data to/reading data from said magnetic disk;

      an initial amplifier for amplifying a signal read out by said magnetic head;

      an automatic gain control amplifier for controlling the amplitude of an output signal from said initial amplifier to be constant;

      two differential signal lines for connecting said initial amplifier with said automatic gain control amplifier; and

      a switching device provided between said differential signal lines.

2.  A recording/reproducing circuit as set forth in Claim 1, further comprising means for turning said switching device on when data is to be written in said magnetic disk and turning said switching device off when data is to be read out from said magnetic disk.

3.  A recording/reproducing circuit as set forth in Claim 1, wherein said switching device is a field effect transistor.

4.  A recording/reproducing circuit for recording data to/reproducing data from a magnetic disk, comprising:

      a magnetic head for writing data to/reading data from said magnetic disk;

      an initial amplifier for amplifying a signal read out by said magnetic head;

      a high pass filter for removing low-frequency noises included in the read signal amplified by said initial amplifier;

      an automatic gain control amplifier for controlling the amplitude of the read signal passing through said high pass filter to be constant;

      two differential signal lines having said high pass filter interposed in the middle thereof and connecting said initial amplifier with said automatic gain control amplifier; and

      a switching device provided between said differential signal lines.

5.  A recording/reproducing circuit as set forth in Claim 4, wherein said switching device is provided between said high pass filter and automatic gain control amplifier.

6.  A recording/reproducing circuit as set forth in Claim 4, further comprising means for turning said switching device on when data is to be written in said magnetic disk and turning said switching device off when data is to be read out from said magnetic disk.

7.  A recording/reproducing circuit as set forth in Claim 4, wherein said switching device is a field effect transistor.

8.  A recording/reproducing circuit as set forth in Claim 4, further comprising:

      a low pass filter for removing high-frequency noises included in the read signal outputted from said automatic gain control amplifier;

      a differentiator for differentiating the read signal passing through said low pass filter; and

      means for detecting a zero-cross point of the differential signal outputted from said differentiator.

9.  A recording/reproducing circuit as set forth in Claim 4, wherein said high pass filter has two capacitors provided respectively in said differential signal lines and a resistance provided between said differential signal lines.

Fig. 1
Prior Art

Fig. 2(a)
Prior Art

READ    WRITE    READ

Fig. 2(b)
Prior Art

READ    WRITE    READ

Fig. 2(c)
Prior Art

READ    WRITE    READ

# Fig. 3

EP 0 468 472 A1

Fig. 4 ( a )

READ    WRITE    READ

Fig. 4 ( b )

READ    WRITE    READ

Fig. 4 ( c )

READ    WRITE    READ

Fig. 5

EP 0 468 472 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP - A1 - 0 216 131 (SIEMENS) <br> * Abstract; fig. 2; column 5, lines 23-30; claims 1,5,7 * | 1,2,4, 6 | G 11 B 20/10 <br> G 11 B 5/035 |
| A | EP - A1 - 0 048 937 (SIEMENS) <br> * Fig. 5; page 8, line 23 - page 9, line 4; claims 1,4 * | 1,2 | |
| A | EP - A2 - 0 200 191 (TOSHIBA) <br> * Fig. 1,8,9; claim 1 * | 1,3,4, 7-9 | |

TECHNICAL FIELDS SEARCHED (Int. Cl.5)

G 11 B 20/00
G 11 B 5/00
H 04 N 5/00

The present search report has been drawn up for all claims

| Place of search | Date of completion of the search | Examiner |
|---|---|---|
| VIENNA | 03-10-1991 | DIMITROW |

EPO FORM 1503 03.82 (P0401)